(19) Europäisches Patentamt / European Patent Office / Office européen des brevets

(11) **EP 3 808 488 B1**

(12) **EUROPEAN PATENT SPECIFICATION**

(45) Date of publication and mention
of the grant of the patent:
**29.04.2026 Bulletin 2026/18**

(21) Application number: **18909263.8**

(22) Date of filing: **18.06.2018**

(51) International Patent Classification (IPC):
**B23K 9/025** $^{(2006.01)}$     **B23K 9/23** $^{(2006.01)}$
**B23K 9/09** $^{(2006.01)}$     **B23K 101/34** $^{(2006.01)}$
**B23K 9/00** $^{(2006.01)}$     **B23K 9/173** $^{(2006.01)}$
**B23K 101/18** $^{(2006.01)}$     **B23K 103/04** $^{(2006.01)}$

(52) Cooperative Patent Classification (CPC):
**B23K 9/0026; B23K 9/025; B23K 9/092;**
**B23K 9/173; B23K 9/23;** B23K 2101/18;
B23K 2101/34; B23K 2103/04

(86) International application number:
**PCT/KR2018/006856**

(87) International publication number:
**WO 2019/245063 (26.12.2019 Gazette 2019/52)**

(54) **PLATED STEEL SHEET WELD MEMBER HAVING EXCELLENT POROSITY-RESISTANCE AND FATIGUE PROPERTY OF WELD ZONE, AND METHOD FOR MANUFACTURING SAME**

GESCHWEISSTES ELEMENT FÜR PLATTIERTE STAHLPLATTE MIT HERVORRAGENDER SCHWEISSZONENPOROSITÄTSBESTÄNDIGKEIT UND ERMÜDUNGSEIGENSCHAFTEN UND VERFAHREN ZUR HERSTELLUNG DAVON

ÉLÉMENT DE SOUDURE EN TÔLE D'ACIER PLAQUÉE AYANT UNE EXCELLENTE RÉSISTANCE À LA POROSITÉ ET UNE EXCELLENTE PROPRIÉTÉ DE FATIGUE DE ZONE DE SOUDURE, ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.04.2021 Bulletin 2021/16**

(73) Proprietor: **POSCO Co., Ltd**
**Pohang-si, Gyeongsangbuk-do 37859 (KR)**

(72) Inventors:
• **BAE, Gyu-Yeol**
**Incheon 22002 (KR)**
• **LEE, Tae-Young**
**Incheon 21648 (KR)**

(74) Representative: **Potter Clarkson**
**Chapel Quarter**
**Mount Street**
**Nottingham NG1 6HQ (GB)**

(56) References cited:
JP-A- 2004 223 548          JP-A- H06 285 643
JP-B2- 5 980 128          KR-A- 20090 122 937
KR-A- 20140 122 269          KR-A- 20140 122 269
KR-A- 20160 077 325          KR-A- 20160 077 325
KR-A- 20180 074 826          US-A1- 2015 041 449

• CHAI X ET AL: "Gas Metal Arc Welding of Magnesium Alloys: Oxide Films, High Crowns, and Fingers", WELDING JOURNAL, AMERICAN WELDING SOCIETY, MIAMI, FL, US, vol. 94, no. 1, 1 January 2015 (2015-01-01), pages 16 - s, XP001593325, ISSN: 0043-2296

**Description**

[Technical Field]

The present invention relates to a welded member for plated steel plate and a method of manufacturing the same (see, for example, JP H06 285643 A, on which the preamble of the independent claims is based).

[Background Art]

In the automobile field, research on weight reduction technology of car bodies and parts has emerged as a major issue in fuel efficiency control policies for environmental protection against such problems as global warming. As chassis components, which are important for the running performance of automobiles, also follow such trend, it is necessary to apply high-strength steel materials for weight reduction. In order to achieve the weight reduction of parts, it is essential to increase the strength of the material, and it can be said that guaranteeing the durability performance of parts made of high-strength steel in an environment where repeated fatigue load is applied is an important factor.

In the case of arc welding, which is mainly used to secure strength in the assembly of automobile chassis parts, lap joint welding is performed between parts by the welding of welding wires, thus formation of geometrical shape of a welded joint is inevitable. This acts as a repeated fatigue stress concentration part (notch effect) and becomes a starting point of fracture, and as a result, the durability performance of the part is reduced, thus the advantage of the application of high strength steel materials is lost.

As described above, in order to improve the fatigue properties of the weld, it is important to reduce the angle of the end of the weld joint, which is mainly a stress concentration part, that is, the toe angle. At the same time, it is important to control the material and stress of a toe part.

In addition, as mentioned above, there is an increasing tendency to increase the adoption of the plated steel material as in prior art 1 due to the increase in the demand for rust prevention properties to prevent penetration corrosion due to the thinning of materials due to the high strength and light weight of the parts. Adoption of the plated steel material is sensitive to the occurrence of pore defects such as pits or blow holes at the time of arc welding, and has the problem of reducing the strength and fatigue properties of the weld.

On the other hand, although the application of Zn-Mg-Al highly corrosion-resistant alloy plated steel with much higher corrosion resistance than existing hot-dip galvanized steel sheets has been proposed, the melting point and vaporization point of ternary alloy plating are lower than those of conventional zinc plating, the generation of plating vapor is more sensitive, and thus it is necessary to develop a technique to suppress the occurrence of pore defects in the weld.

Although Patent Document 1 proposes setting a gap of a lap joint portion in the range of 0.2 to 1.5 mm in order to suppress the generation of pore defects of a galvanized steel plate arc welded portion, there is a limit in which the welding characteristics for a joint structure having no clearance can not be guaranteed when the actual part is applied.

Further, in Patent Document 2, in order to suppress the generation of pore defects in galvanized steel sheet arc welds, it is proposed to apply a triple mixed gas of $CO_2$ and $O_2$ mixed with Ar and a low-viscosity solid wire, which limits the content of Si and Mn. In addition, it is proposed that the arc position is 1 mm at a tip of a welding lap joint. However, the restriction of a protective gas and a welding material is inevitable, and the arc position must be kept constant when the actual part is applied.

Patent Document 3 discloses a welding member comprising: a first member; a second member stacked for at least a portion thereof to be overlapped on the first member; and a welding metal portion formed by arc welding wherein the first member and the second member are overlapped. Moreover, a toe angle of the welding metal portion is equal to or less than 35° (excluding 0°).

Patent Document 4 discloses an arc welding method for a steel sheet, which method includes arc welding of the steel sheet having a bubble-generating material using argon gas or argon mixed with carbonic acid gas at a ratio of <=25%, wherein an average effective current is varied with a frequency of 10-50Hz based on a current wave pattern or wire feed speed. Because arc force works to depress a molten pool the molten pool becomes undulatory as the arc force varies, a bubble reaches the surface of molten pool by flow of the molten pool and buoyancy of the bubble so as to be released outside the molten pool. Consequently blow holes cannot remain in the molten pool, and thus the mechanical strength of weld zone is improved.

(Patent Document 0001) Japanese Patent Laid-Open Publication No. 2016-101593

(Patent Document 0002) Japanese Patent Laid-Open Publication No. 2015-167981

(Patent Document 0003) KR20160077325

(Patent Document 4) JPH06285643

[Disclosure]

[Technical Problem]

An embodiment of the present invention seeks to provide a welded member for plated steel plate having excellent weld zone porosity resistance and fatigue properties.

In addition, the embodiments of the present invention seek to provide a method of manufacturing a welded member for plated steel plate having excellent weld zone porosity resistance and fatigue properties.

[Technical Solution]

A welded member for plated steel plate according to the invention is defined in claim 1.

The hot-rolled steel plate may have a tensile strength of 590 MPa or more and a thickness of 6 mm or less.

Also, the hot-rolled steel plate may be a 590FB steel.

Optionally the fatigue strength of the weld metal portion may be 250 MPa or more, and the fatigue life may be 2,000,000 cycles or more with a cyclic fatigue load of 10 kN (minimum / maximum load ratio, R = 0.1).

A method of manufacturing a welded member for plated steel plate according to the invention is defined in claim 5.

Optionally, at the time of arc welding, the diameter of the solid wire may be 1.0 to 1.2 mm, the torch angle may be 30 to 45°, the push angle may be 0 to 25°, and welding speed may be 0.6 to 1.0 m / min.

Further the hot-rolled steel sheet may have a tensile strength of 590 MPa or more and a thickness of 6 mm or less.

[Advantageous Effects]

In the production of a welded member for plated steel plate having excellent weld zone porosity resistance and fatigue properties according to the invention, pore defects in a weld metal portion can be effectively reduced through optimization of the wave frequency of a welding current. The fatigue stress concentration on a weld toe can be reduced by controlling the toe angle of the weld metal portion. Therefore, a highly corrosion-resistant coated steel sheet can be used to ensure high strength of parts such as chassis members of automobiles, and rust prevention properties due to the thinning of the parts. Thus, a welded member for plated steel plate having excellent weld zone porosity resistance and fatigue properties can be obtained.

[Description of Drawings]

FIG. 1 is a photograph of a cross section of a welded member for plated steel plate having excellent weld zone porosity resistance and fatigue properties according to an embodiment of the invention.

FIG. 2 is a photograph of the appearance of a weld according to an embodiment of the invention.

FIG. 3 is an X-ray photograph of the appearance of a weld according to an embodiment of the invention.

FIG. 4 is a photograph showing tensile fracture test results of a welded member for plated steel plate according to an example of the invention.

FIG. 5 is a schematic view for explaining a weld metal portion of a welded member for plated steel plate according to an embodiment of the invention.

FIG. 6 is a graph for explaining a molten metal agitation wave frequency at the time of arc welding of a welded member for plated steel plate according to an embodiment of the invention.

[Best Mode]

A welded member for plated steel plate having excellent weld zone porosity resistance and fatigue properties comprises a weld metal portion formed by arc welding and overlapping a first member and a laminated second member so as to partially overlap the first member, wherein the toe angle ($\theta$) of the weld metal portion is 45° or less, and the first member and the second member are plated steel plates.

[Modes of the Invention]

Hereinafter, embodiments of the invention will be described in detail with reference to the attached drawings. The following examples are presented to fully convey the invention to those skilled in the art to which the invention belongs. The invention is not limited to the embodiments presented herein, but may be embodied in other forms. The drawings omit illustration of parts not related to the description to clarify the invention, and the size of components may be expressed in a somewhat exaggerated manner to facilitate understanding.

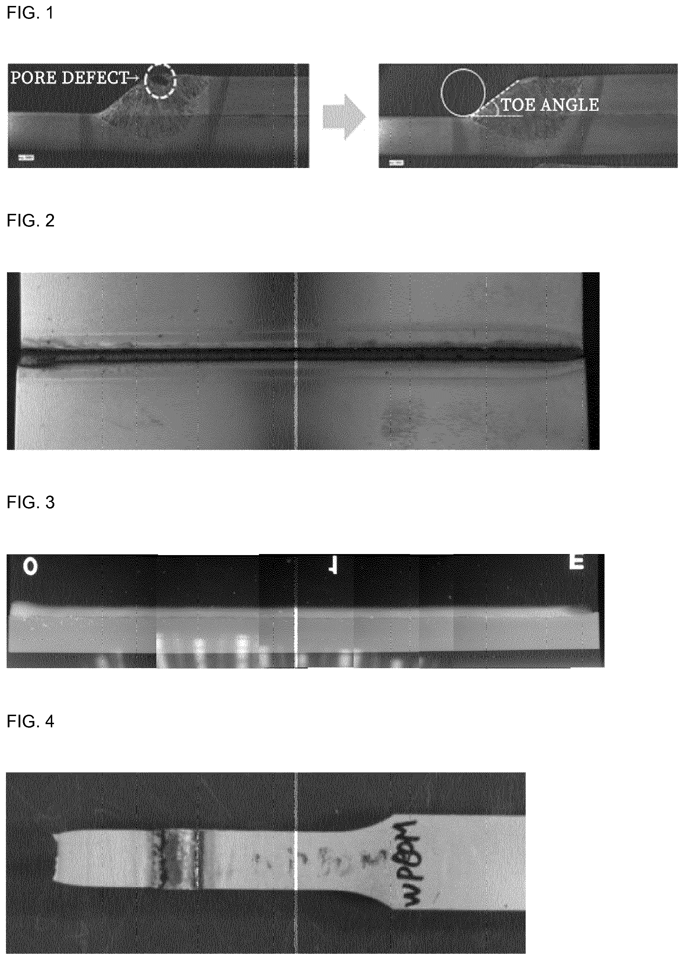

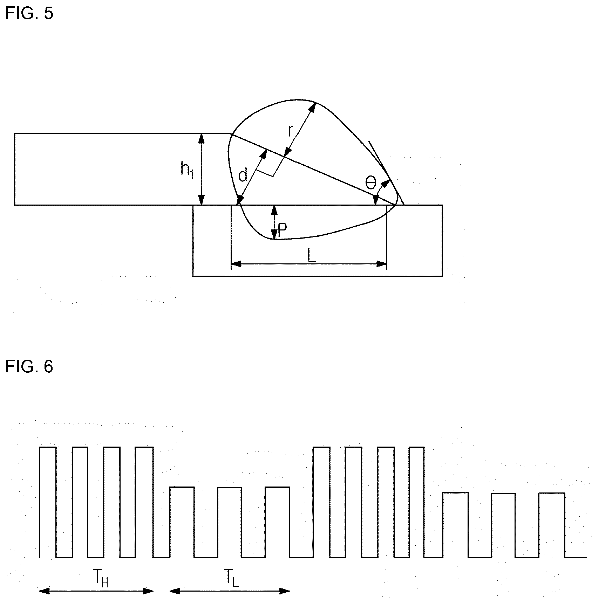

FIG. 1 is a photograph of a cross section of a welded member for plated steel plate having excellent weld zone porosity resistance and fatigue properties according to the invention. FIG. 2 is a photograph of the appearance of a weld according to an embodiment of the invention. FIG. 3 is an X-ray photograph of the appearance of a weld according to an embodiment of the invention. FIG. 4 is a photograph showing tensile fracture test results of a welded member for plated steel plate according to an example of the invention. FIG. 5 is a schematic view for explaining a weld metal portion of a welded member for plated steel plate according to an embodiment of the invention.

Referring to FIGS. 1 to 5, a welded member for plated steel plate having excellent weld zone porosity resistance and fatigue properties according to an embodiment of the invention comprises a weld metal portion formed by arc welding and overlapping a first member and a laminated second member so as to partially overlap the first member.

At this time, the toe angle ($\theta$) of the weld metal portion is 45 ° or less.

Methods of increasing the fatigue properties of the welded member can be broadly classified into methods utilizing residual stress and methods controlling the shape of a bead.

It is an object of the invention to improve the fatigue properties of the welded member by controlling the bead shape. To this end, the toe angle of the weld metal portion is set to 45° or less, preferably 35° or less (excluding 0°), and more preferably 30° or less (except 0°).

Here, the toe angle refers to an angle formed by the tangent of a bead curvature portion closest to a boundary line between the first member and the second member and a weld toe of the weld metal portion, with the weld toe as a reference point. At this time, a contact point where the boundary line between the first member and the second member and the weld metal portion in the cross section perpendicular to a weld line is defined as the weld toe.

By forming the toe angle at 45 ° or less, the stress concentrated on the weld metal portion can be relieved, and along with this, the fatigue properties of the weld member can be improved.

By controlling the toe angle of the weld metal portion as described above, it is possible to improve the fatigue characteristics of the weld portion. However, in order to maximize the effect, it is preferable to appropriately control the penetration depth of the weld metal portion. According to the invention, the penetration depth of the weld metal portion is controlled to 45% or more of the thickness of the second member. If the penetration depth of the weld metal portion is insufficient, the fatigue load may cause breakage of the weld metal portion starting from a bead route due to the repeated fatigue load.

Further, the first member and the second member are plated steel plates.

By using the plated steel plate instead of a general hot-rolled steel plate, it is possible to secure rust prevention properties to prevent penetration corrosion due to the thinning of materials due to the high strength and light weight of parts.

The plated steel plate is a Zn-Mg-Al based alloy plated or galvanized hot-rolled steel plate. More preferably, the plated steel plate may be a hot-rolled steel sheet plated with a Zn-Mg-Al alloy, which is more corrosion resistant than the galvanized hot-rolled steel sheet.

The hot-rolled steel plate may have a tensile strength of 590 MPa or more and a thickness of 6 mm or less, and the hot-rolled steel plate may be 590FB steel whose microstructure includes ferrite and bainite.

In accordance with the invention the pore area ratio formed in the weld metal portion is less than 0.5%.

In the case of welding the welded member for plated steel plate according to the conventional arc welding method, a large amount of pore defects such as pits or blow holes are generated due to the generation of plating vapor when a plated layer comes in contact with the welding arc, and there is a problem in that strength and fatigue properties of a welded portion are lowered.

In addition, in the case of Zn-Mg-Al type highly corrosion-resistant alloy plated steel sheet that is superior in corrosion resistance compared to an existing zinc-coated steel sheet, the melting point and vaporization point of ternary alloy plating are much lower. Therefore, there is a problem in that the amount of plating vapor generated is larger and the rate of occurrence of pore defects is higher.

However, according to the manufacturing method including arc welding according to one embodiment of the invention, not only an existing galvanized steel sheet but also the Zn-Mg-Al highly corrosion-resistant alloy plated steel sheet is used to minimize such problems. In any case, the pore area ratio of the weld metal portion is limited to less than 0.5%, and preferably to 0%.

As an example of the invention the fatigue strength of the weld metal portion may be 250 MPa or more, and a fatigue life of 2,000,000 cycles or more can be secured with a cyclic fatigue load of 10 kN (minimum / maximum load ratio, R = 0.1). It can be seen that the part fatigue properties are excellent. Here the fatigue strength (or fatigue limit) is defined as a value obtained by dividing the maximum fatigue load value at which the fatigue life becomes 2,000,000 cycles or more by the cross-sectional area of the member.

A method in accordance with the invention includes a step of forming the weld metal portion through arc welding and overlapping a first member and a laminated second member so as to partially overlap the first member.

In the method, after preparing the first member and the second member a welding line is formed by laminating the second member on the first member so that at least a part thereof is overlapped. Here, the welding line means the end of the second member in an area where the first member and the second member overlap.

The overlapping width of a welded joint portion may be about 5 to 50 mm, but is not limited thereto.

At this time, the arc welding is performed while providing a shielding gas along the formed welding line, and at the time of the arc welding, a welding current is supplied to a solid wire to generate an arc for welding.

The solid wire is fed into the shielding gas which is Ar gas containing 10-30% $CO_2$ gas. Preferably, the shielding gas may be Ar gas containing 10 to 20% of $CO_2$ gas.

That is, the shielding gas is Ar gas and contains 10 to 30% of $CO_2$ gas. If the content of $CO_2$ gas is less than 10%, the effect of arc heat pinch force due to arc contraction is reduced, and the effect of discharging the plating vapor is lowered. If the content of $CO_2$ gas is more than 30%, the effect of the arc heat pinch force due to arc expansion is excessive, and the effect of discharging the plating vapor is lowered.

The first member and the second member to be welded are plated steel plates and may be galvanized steel plates. In this example a galvanized layer, which has a low boiling point due to arc heat during arc welding, floats to the upper part of a molten part as zinc gas.

Most of the zinc is released, but in the prior art method a part thereof remains in the molten part, and a pit which is a small pit when the solidification of the zinc gas near the surface of a base material is formed. Most of the zinc gas is released, but a part of the zinc gas remains in the molten part, and a spherical bubble hole is formed at the time of solidification, and a pit is formed when the zinc gas coagulates near the surface of the base material.

However by using Ar gas containing $CO_2$ gas as the shielding gas, it is possible to drastically weld the weld under the solid wire by increasing the arc force generated between the solid wire and the base material in gas shield arc welding. As a result, the discharge of the zinc gas generated in the lower portion of the molten metal portion can be facilitated, and the depth of penetration of the weld metal portion can be further increased during the gas shield arc welding. Ultimately, it is possible to suppress the occurrence of pitting defects and improve the fatigue properties of the welded portion.

As the welding material, the solid wire can be used. For example, ER70S-3 (KC-25M) 1.2 solid wire can be applied, but the invention is not particularly limited thereto.

The welding current is a pulse current repeated with a first peak and a second peak having a current value smaller than the first peak.

The pulse current is repeatedly supplied at a welding molten metal stirring wave frequency of 20 to 30 Hz defined by the following equation (1) to perform welding.

$$1 / (T_H + T_L) \text{ --- Formula (1)}$$

Here, $T_H$ is a period of the first peak, and $T_L$ is a period of the second peak.

FIG. 6 is a graph for explaining a molten metal agitation wave frequency at the time of arc welding of a welded member for plated steel plate according to the invention.

The welding molten metal stirring wave frequency is defined as $1 / (T_H + T_L)$ as shown in FIG 6. Due to this, the pulse current is supplied repeatedly in the range of 20 to 30 Hz. If this frequency range is excessively low or high, the effect of discharging the plating vapor may be reduced, which may make it difficult to reduce the pore defects.

In the method of the invention the welding current is in the range of 200-300A.

More preferably, the lower limit of the welding current may be 225A or more, and the upper limit may be 270A or less. If the current is too low, the effect of discharging plating steam drops due to the decrease of the arc power. On the other hand, if the current is too high, the weld metal portion becomes unstable and the incidence of pore defects increases.

In the arc welding, the diameter of the solid wire may be 1.0 to 1.2 mm, the torch angle may be 30 to 45°, the push angle may be 0 to 25°, and the welding speed may be 0.6 to 1.0 m / min.

Preferably a gap of the welded joint is 0 mm, although the invention is not limited thereto.

Further, the first member and the second member are Zn-Mg-Al alloy plated or galvanized hot-rolled steel plates. The hot-rolled steel sheet may have a tensile strength of 590 MPa or more and a thickness of 6 mm or less. The detailed description of the first member and the second member is the same as that described above, and thus will not be repeated.

Hereinafter, the invention will be described in more detail through examples.

Inventive Examples 1 to 4 and Comparative Examples 1 to 6

Two 2.2 mm thick 590FB sheets plated with Zn-Mg-Al with a plating amount of 90 g / m$^2$ were placed on both sides of steel plates so that they overlapped each other by 20mm. Then, connection parts were welded by arc welding according to the conditions shown in Table 1 below.

[Table 1]

|  | Shielding gas | Welding materials | Welding condition | Welding pulse(Hz) current frequency (Hz) |
|---|---|---|---|---|
| Inventive Example 1 | Ar+20%$CO_2$ | KC-25M Φ 1.2 | 200A, 60cm/min | 30 |
| Inventive Example 2 | Ar+20%$CO_2$ | KC-25M Φ 1.2 | 225A, 60cm/min | 30 |
| Inventive Example 3 | Ar+20%$CO_2$ | KC-25M Φ 1.2 | 225A, 80cm/min | 30 |
| Inventive Example 4 | Ar+20%$CO_2$ | KC-25M Φ 1.2 | 225A, 100cm/min | 30 |
| Comparative Example 1 | Ar+30%$CO_2$ | MIX-Zn Φ 1.0 | 200A, 80cm/min | 20 |
| Comparative Example 2 | Ar+30%$CO_2$ | MIX-Zn Φ 1.0 | 220A, 80cm/min | 20 |
| Comparative Example 3 | Ar+20%$CO_2$ | KC-25M Φ 1.2 | 200A, 100cm/min | 0 |
| Comparative Example 4 | Ar+20%$CO_2$ | KC-25M Φ 1.2 | 300A, 100cm/min | 0 |
| Comparative Example 5 | Ar+20%$CO_2$ | KC-25M Φ 1.2 | 200A, 60cm/min | 20 |
| Comparative Example 6 | Ar+20%$CO_2$ | KC-25M Φ 1.2 | 250A, 80cm/min | 20 |

The presence of pits and the pore area ratio were measured by observing the weld metal portion of the welded member, and are shown in Table 2 below.

[Table 2]

|  | Pitting occurrence | Pore area ratio(%) |
|---|---|---|
| Inventive Example 1 | X | 0.0 |
| Inventive Example 2 | X | 0.0 |
| Inventive Example 3 | X | 0.0 |
| Inventive Example 4 | X | 0.0 |
| Comparative Example 1 | 0 | 2.5 |
| Comparative Example 2 | 0 | 7.4 |
| Comparative Example 3 | 0 | 1.6 |
| Comparative Example 4 | 0 | 4.1 |
| Comparative Example 5 | 0 | 0.6 |
| Comparative Example 6 | 0 | 2.4 |

FIG. 5 is a schematic view for explaining a weld metal portion of a welded member for plated steel plate according to an embodiment of the invention.

In FIG. 5, the width of the weld metal portion, that is the leg length, is L, the thickness of the second member is h1, the distance from a straight line from an upper surface edge of the second member to a toe portion on the first member to a contact point of the first and second members and the weld metal portion is represented by d, the distance to the highest surface of the weld metal portion is r, and the penetration depth is p, respectively. Table 3 shows the results of observation of the size of the weld metal portion according to an embodiment of the present invention.

[Table 3]

|  | h1 (mm) | L (mm) | r (mm) | d (mm) | p (mm) | Toe angle(° ) |
|---|---|---|---|---|---|---|
| Inventive Example 1 | 2.2 | 6.0 | 1.8 | 1.6 | 1.2 | 38 |

(continued)

|  | h1 (mm) | L (mm) | r (mm) | d (mm) | p (mm) | Toe angle(°) |
|---|---|---|---|---|---|---|
| Inventive Example 2 | 2.2 | 6.2 | 1.8 | 1.6 | 1.4 | 33 |
| Inventive Example 3 | 2.2 | 5.9 | 1.8 | 1.7 | 2.1 | 30 |
| Inventive Example 4 | 2.2 | 4.8 | 1.4 | 1.7 | 1 | 44 |

Referring to the above contents, the toe angle of the weld metal portion of the weld member according to the invention can be maintained at 45 ° or less, and pits and pores are not generated in the welded metal portion. Thus the porosity resistance of the welded member for plated steel plate can be improved.

The strength of the welded metal portion can be secured to 250 MPa or more, and the application range of the high strength plated hot rolled thin plate steel for the purpose of making parts such as automobile chassis members etc. thinner and lighter can be increased.

[Industrial Applicability]

The welded member for plated steel plate having excellent weld zone porosity resistance and fatigue properties and its manufacturing method according to the embodiments of the present invention can be applied to parts such as an automobile chassis member.

**Claims**

1. A welded member for plated steel plate having excellent weld zone porosity resistance and fatigue properties comprising:

   a first member,
   a second member laminated on the first member, and
   a weld metal portion formed by arc welding and overlapping the first member and the laminated second member so as to partially overlap the first member,
   wherein the first member and the second member are Zn-Mg-Al alloy-plated or galvanized hot-rolled steel plates;
   the welded member being **characterized in that** the pore area ratio of the weld metal portion is less than 0.5%;
   the toe angle ($\theta$) of the weld metal portion is 45° or less, and
   wherein the penetration depth of the weld metal portion is 45% or more compared to the thickness of the second member.

2. The welded member for plated steel plate according to claim 1, wherein the hot-rolled steel plate has a tensile strength of 590 MPa or more and a thickness of 6 mm or less.

3. The welded member for plated steel plate according to claim 2, wherein the hot-rolled steel plate is a 590FB steel.

4. The welded member for plated steel plate according to claim 1, wherein the fatigue strength of the weld metal portion is 250 MPa or more, and the fatigue life is 2,000,000 cycles or more with a cyclic fatigue load of 10 kN (minimum / maximum load ratio, R = 0.1).

5. A method of manufacturing a welded member for plated steel plate having excellent weld zone porosity resistance and fatigue properties comprising:

   forming a weld metal portion through arc welding and overlapping a first member and a laminated second member so as to partially overlap the first member, wherein the first member and the second member are Zn-Mg-Al alloy plated or galvanized hot-rolled steel plates,
   supplying a welding current to a solid wire to generate an arc,
   wherein the welding current is a pulse current repeated with a first peak and a second peak having a current value smaller than the first peak, and wherein the solid wire is fed into a shielding gas which is Ar gas containing 10 to 30% of $CO_2$ gas; the method being **characterized in that** it comprises:

   a welding molten metal stirring wave frequency defined by the following formula: $1 / (T_H + T_L)$, where $T_H$ is a period of the first peak, and $T_L$ is a period of the second peak, is 20 To 30 Hz; and further **in that** the welding current is in the range of 200 to 300A and wherein the penetration depth of the weld metal portion is 45% or more compared to the thickness of the second member; and the toe angle ($\theta$) of the weld metal portion is 45° or less.

6. The method according to claim 5, wherein the diameter of solid wire: 1.0 to 1.2 mm, torch angle: 30 to 45 °, push angle: 0 to 25 °, and welding speed: 0.6 to 1.0 m / min.

7. The method according to claim 5, wherein the hot-rolled steel sheet has a tensile strength of 590 MPa or more and a thickness of 6 mm or less.

**Patentansprüche**

1. Geschweißtes Element für beschichtetes Stahlblech mit hervorragender Porositätsbeständigkeit im Schweißbereich und hervorragenden Ermüdungseigenschaften, umfassend:

   ein erstes Element,
   ein zweites Element, das auf das erste Element laminiert ist, und
   einen durch Lichtbogenschweißen gebildeten Schweißmetallabschnitt, der das erste Element und das laminierte zweite Element so überlappt, dass er das erste Element teilweise überlappt,
   wobei das erste Element und das zweite Element mit einer Zn-Mg-Al-Legierung beschichtete oder verzinkte warmgewalzte Stahlbleche sind; wobei das geschweißte Element **dadurch gekennzeichnet ist, dass** der Porenflächenanteil des Schweißmetallabschnitts weniger als 0,5 % beträgt;
   den Fasenwinkel ($\theta$) des Schweißmetallabschnitts, der 45° oder weniger beträgt, und
   wobei die Eindringtiefe des Schweißmetallabschnitts im Vergleich zur Dicke des zweiten Elements 45 % oder mehr beträgt.

2. Geschweißtes Element für beschichtetes Stahlblech nach Anspruch 1, wobei das warmgewalzte Stahlblech eine Zugfestigkeit von 590 MPa oder mehr und eine Dicke von 6 mm oder weniger aufweist.

3. Geschweißtes Element für beschichtetes Stahlblech nach Anspruch 2, wobei es sich bei dem warmgewalzten Stahlblech um einen 590FB-Stahl handelt.

4. Geschweißtes Element für beschichtetes Stahlblech nach Anspruch 1, wobei der Schweißmetallabschnitt eine Dauerfestigkeit von 250 MPa oder mehr hat und die Lebensdauer bei einer zyklischen Dauerbelastung von 10 kN (Verhältnis von Minimal/zu Maximalbelastung, R = 0,1) 2.000.000 Zyklen oder mehr hat.

5. Verfahren zur Herstellung eines geschweißten Elements für beschichtetes Stahlblech mit hervorragender Porositätsbeständigkeit im Schweißbereich und hervorragenden Ermüdungseigenschaften, umfassend:

   Bilden eines Schweißmetallabschnitts durch Lichtbogenschweißen und Überlappen eines ersten Elements und eines laminierten zweiten Elements, sodass das erste Element teilweise überlappt wird, wobei das erste Element und das zweite Element mit einer Zn-Mg-Al-Legierung beschichtete oder verzinkte warmgewalzte Stahlbleche sind,
   Zuführen eines Schweißstroms zu einem Massivdraht, um einen Lichtbogen zu erzeugen,
   wobei der Schweißstrom ein Impulsstrom ist, der sich mit einer ersten Spitze und einer zweiten Spitze wiederholt, wobei die zweite Spitze einen Stromwert aufweist, der kleiner ist als der der ersten Spitze, und wobei der Massivdraht in ein Schutzgas eingeführt wird, bei dem es sich um Argongas handelt, das 10 bis 30 % $CO_2$-Gas enthält; das Verfahren ist **dadurch gekennzeichnet, dass** es Folgendes umfasst:

   eine Frequenz der Rührwelle für geschmolzenes Schweißmetall, die durch die folgende Formel definiert ist: $1/(T_H + T_L)$, wobei $T_H$ die Periode der ersten Spitze und $T_L$ die Periode der zweiten Spitze ist, zwischen 20 und 30 Hz liegt; und ferner dadurch, dass der Schweißstrom im Bereich von 200 bis 300A liegt und wobei die Eindringtiefe des Schweißmetallabschnitts im Vergleich zur Dicke des zweiten Elements 45 % oder mehr beträgt; und der Fußwinkel ($\theta$) des Schweißzusatzabschnitts 45° oder weniger beträgt.

6. Verfahren nach Anspruch 5, wobei der Durchmesser des Massivdrahtes: 1,0 bis 1,2 mm, der Brennerwinkel: 30 bis 45°, der Vorschubwinkel: 0 bis 25° und die Schweißgeschwindigkeit: 0,6 bis 1,0 m/min beträgt.

7. Verfahren nach Anspruch 5, wobei das warmgewalzte Stahlblech eine Zugfestigkeit von 590 MPa oder mehr und eine Dicke von 6 mm oder weniger aufweist.

**Revendications**

1. Élément soudé pour tôle d'acier plaquée ayant une excellente résistance à la porosité en zone de soudure et d'excellentes propriétés de résistance à la fatigue comprenant :

   un premier élément,
   un second élément stratifié sur le premier élément, et
   une partie de métal fondu formée par soudure à l'arc et recouvrant le premier élément et le second élément stratifié de manière à recouvrir partiellement le premier élément,
   dans lequel le premier élément et le second élément sont des tôles d'acier laminées à chaud revêtues d'un alliage Zn-Mg-Al ou galvanisées ; l'élément soudé étant **caractérisé en ce que** le rapport de surface poreuse de la partie de métal fondu est inférieur à 0,5 % ;
   l'angle de pincement ($\theta$) de la partie de métal fondu est de 45° ou moins, et
   dans lequel la profondeur de pénétration de la partie de métal fondu est de 45 % ou plus par rapport à l'épaisseur du second élément.

2. Élément soudé pour tôle d'acier plaquée selon la revendication 1, dans lequel la tôle d'acier laminée à chaud a une résistance à la traction de 590 MPa ou plus et une épaisseur de 6 mm ou moins.

3. Élément soudé pour tôle d'acier plaquée selon la revendication 2, dans lequel la tôle d'acier laminée à chaud est en acier 590FB.

4. Élément soudé pour tôle d'acier plaquée selon la revendication 1, dans lequel la résistance à la fatigue de la partie de métal fondu est de 250 MPa ou plus, et la durée de vie en fatigue est de 2 000 000 de cycles ou plus sous une charge de fatigue cyclique de 10 kN (rapport charge minimale/charge maximale, R = 0,1).

5. Procédé de fabrication d'un élément soudé pour tôle d'acier plaquée ayant une excellente résistance à la porosité en zone de soudure et d'excellentes propriétés de résistance à la fatigue comprenant :

   la formation d'une partie de métal fondu par soudure à l'arc et le recouvrement d'un premier élément et d'un second élément stratifié de manière à recouvrir partiellement le premier élément, dans lequel le premier élément et le second élément sont des tôles d'acier laminées à chaud revêtues d'un alliage Zn-Mg-Al ou galvanisées,
   la fourniture d'un courant de soudure à un fil plein pour générer un arc,
   dans lequel le courant de soudure est un courant pulsé répété avec un premier pic et un second pic ayant une valeur de courant inférieure à celle du premier pic, et
   dans lequel le fil plein est alimenté dans un gaz de protection qui est un gaz Ar contenant 10 à 30 % de gaz $CO_2$ ; le procédé étant **caractérisé en ce qu'**il comprend :

      une fréquence d'onde d'agitation de métal en fusion de soudure définie par la formule suivante : $1 / (T_H + T_L)$, où $T_H$ représente une période du premier pic et $T_L$ représente une période du second pic, est de 20 à 30 Hz ; et en outre **en ce que**
      le courant de soudure est dans la plage de 200 à 300A et dans lequel la profondeur de pénétration de la partie de métal fondu est de 45 % ou plus par rapport à l'épaisseur du second élément ; et l'angle de pincement ($\theta$) de la partie de métal fondu est de 45° ou moins.

6. Procédé selon la revendication 5, dans lequel le diamètre du fil plein : 1,0 à 1,2 mm, angle de la torche : 30 à 45 °, angle de poussée : 0 à 25 °, et vitesse de soudure : 0,6 à 1,0 m / min.

7. Procédé selon la revendication 5, dans lequel la tôle d'acier laminée à chaud a une résistance à la traction de 590 MPa ou plus et une épaisseur de 6 mm ou moins.

FIG. 1

FIG. 2

FIG. 3

FIG. 4

FIG. 5

FIG. 6

**EP 3 808 488 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06285643 A
- JP 2016101593 A
- JP 2015167981 A
- KR 20160077325
- JP H06285643 B